(19) Europäisches Patentamt
European Patent Office
Office européen des brevets

(11) Veröffentlichungsnummer: **0 185 860 B1**

(12) **EUROPÄISCHE PATENTSCHRIFT**

(45) Veröffentlichungstag der Patentschrift: **02.11.95**

(51) Int. Cl.6: **C08L 71/12**

(21) Anmeldenummer: **85112198.8**

(22) Anmeldetag: **26.09.85**

(54) **Thermoplastische Massen auf Basis von Polyphenylenethern, Styrolpolymerisaten und Polyoctenylenen.**

(30) Priorität: **20.11.84 DE 3442273**

(43) Veröffentlichungstag der Anmeldung:
**02.07.86 Patentblatt 86/27**

(45) Bekanntmachung des Hinweises auf die Patenterteilung:
**02.11.95 Patentblatt 95/44**

(84) Benannte Vertragsstaaten:
**AT BE CH DE FR GB IT LI NL SE**

(56) Entgegenhaltungen:
**EP-A- 0 095 098**
**DE-A- 2 119 301**
**DE-A- 2 802 664**
**DE-A- 3 138 401**
**US-A- 4 164 493**

**KAUTSCHUK & GUMMI KUNSTSTOFFE, Band 34, März 1981, Seiten 185-190, Heidelberg, A. DRÄXLER "Trans-Polyoctenamer"**

**KAUTSCHUK UND GUMMI KUNSTSTOFFE, Band 36, Dezember 1983, Seiten 1037-1043, Heidelberg; A. DRÄXLER "Die Stellung der Polyoctenamere unter den technisch genutzten Kautschuken"**

(73) Patentinhaber: **HÜLS AKTIENGESELLSCHAFT**
**D-45764 Marl (DE)**

(72) Erfinder: **Jadamus, Hans, Dr.**
**Hervester Strasse 8**
**D-4370 Marl (DE)**
Erfinder: **Ribbing, Wilfried, Dr.**
**Heesternweg 20**
**D-4270 Dorsten (DE)**
Erfinder: **Feinauer, Roland, Dr.**
**Flämingstrasse 34**
**D-4370 Marl (DE)**
Erfinder: **Schäfer, Wolfgang, Dr.**
**Wiesenstrasse 71**
**D-4370 Marl (DE)**

EP 0 185 860 B1

**Beschreibung**

Polyphenylenether, auch Polyphenylenoxide genannt, sind Polymere mit guten thermischen und elektrischen Eigenschaften. Technische Bedeutung hat insbesondere Poly(2,6-dimethyl-1,4-phenylenether) (PPE) als Bestandteil thermoplastischer Formmassen erlangt. Reine Polyphenylenether sind aufgrund der hohen Schmelzviskosität nur schwierig zu verarbeiten. Die aus ihnen hergestellten Formkörper weisen hohe Wärmeformbeständigkeit auf. Allerdings sind diese, insbesondere im Bereich äußerer Kerben, wenig schlagzäh.

Es sind zahlreiche Vorschläge gemacht worden, um die Verarbeitbarkeit und die Kerbschlagzähigkeit der Formmassen zu verbessern (vgl. DE-PS 16 94 255 entsprechend US-PS 3 361 851, DE-PS 16 94 257 entsprechend US-PS 3 383 435 und DE-PS 16 94 290 entsprechend US-PS 3 379 792). Doch hat sich gezeigt, daß der Zusatz von Polyolefinen, Polystyrolen bzw. Polyamiden das Eigenschaftsbild von PPE-haltigen Formmassen noch nicht in optimaler Weise beeinflußt.

Größere technische Bedeutung haben Abmischungen von Polyphenylenethern mit schlagzähen Polystyrolen erlangt (vgl. DE-PS 22 11 005). Die in der DE-PS 21 19 301 beanspruchten thermoplastischen Massen bestehen aus Polyphenylenethern und einem kautschukmodifizierten Polystyrol und/oder einem Polystyrol und einem Kautschuk. Für Massen, bei denen der mittlere Teilchendurchmesser der dispergierten elastomeren Phase unter maximal etwa 2 $\mu$m liegt, werden höhere Schlagzähigkeiten geltend gemacht.

Im Prinzip lassen sich Mischungen aus Polyphenylenethern und schlagzähen Styrolpolymerisaten mit unterschiedlichen Kautschukgehalten herstellen. Dieser Weg ist aber aufwendig, da zahlreiche Polystyroltypen bereit gehalten werden müssen, um die jeweils gewünschten Qualitäten einstellen zu können.

Es wäre einfacher, könnte man unterschiedliche Qualitäten thermoplastischer Massen durch Abmischen von Polyphenylenethern, einem handelsüblichen Polystyroltyp und Additiven zur Schlagzähigkeitsverbesserung herstellen.

Eine nachträgliche Einarbeitung von Kautschuken in Mischungen aus Polyphenylenethern und Styrolpolymerisaten ist zwar möglich, doch ist zu berücksichtigen, daß die Kautschuke, die üblicherweise in Ballenform vorliegen, schwer handhabbar sind. Dieser Weg ist daher mit erheblichen technischen Schwierigkeiten verbunden

Der zurückgezogenen EP-OS 0 016 829 ist zu entnehmen, daß neben Kautschuken, die durch Polymerisation von Butadien erhalten werden und die allgemeine Formel $\{CH=CH\text{-}(CH_2)_2\}_x$ aufweisen, nunmehr auch Polyalkenylene der allgemeinen Struktur $\{CH=CH\text{-}(CH_2)_n\}_x$ zur Verfügung stehen, die durch ringöffnende Polymerisation von Cycloolefinen erhältlich sind. Dabei ist n die Zahl der Ringatome minus 2. Polypentenylen sei von besonderem Interesse, da Formmassen aus Polyphenylenethern und Polypentenylen als auch solche aus Polyphenylenethern und einem mit Polypentenylen modifizierten Styrolharz verbesserte Schlagzähigkeitswerte ergäben. Abgesehen davon, daß Polypentenylen kommerziell nicht mehr erhältlich ist, ist seine Einarbeitung in Polyphenylenether mit ähnlichen Schwierigkeiten verbunden wie die Vermischung mit üblichen Kautschuken. Der DE-OS 31 38 401 ist zu entnehmen, daß die gemäß EP-OS 0 016 829 erhaltenen Formmassen hinsichtlich ihrer Witterungsbeständigkeit und Schlagzähigkeit noch verbesserungswürdig seien.

Gegenstand der DE-OS 31 38 401 sind Formmassen, die Polyphenylenether und ein schlagfest modifiziertes Styrolpolymerisat enthalten. Als Weichkomponente des Styrolpolymerisats dient ein Polyoctenylen mit einer Glasübergangstemperatur von unter -40 °C.

Mit diesen Abmischungen wurde keine Verbesserung der Schlagzähigkeit gegenüber üblicherweise als Weichkomponente eingesetzten Kautschuken erreicht.

Nachdem sowohl Massen auf Basis von Polyphenylenethern und Polypentenylenen als auch solche auf Basis von Polyphenylenethern und schlagfest modifiziertem Styrolpolymerisat mit Polyoctenylen als Weichkomponente keine besonderen Vorteile hatten erkennen lassen, schienen Polyoctenylene enthaltende Polyphenylenetherabmischungen kaum geeignet, den gestiegenen Anforderungen nach hoch schlagzähen Formmassen gerecht zu werden, zumal mit Schwierigkeiten bei der Einarbeitung zu rechnen war.

Aufgabe der vorliegenden Erfindung waren Polymermischungen auf Basis von Polyphenylenethern mit überlegener Kerbschlagzähigkeit, die durch Variation der Mengenverhältnisse ihrer Komponenten ein hohes Maß an Wahlfreiheit im Einstellen der vorgegebenen Eigenschaften wie Wärmeformbeständigkeit, Schlagzähigkeit und Verarbeitbarkeit erlauben.

Es wurde gefunden, daß sich thermoplastische Massen aus

A 20 bis 90 Massenteilen Polyphenylenether,

B 5 bis 70 Massenteilen Styrolhomopolymerisate oder schlagzähe statistische Styrolpolymerisate

C 2 bis 70, insbesondere 2 - 20 Massenteilen Polyoctenylenen,

D 0 bis 20 Massenteilen Copolymeren auf Basis von Styrol und Butadien und

E gegebenenfalls weiteren Zusatzstoffen, die durch mischen n der Schmelze der Komponenten hergestellt wurden, durch hohe Schlagzähigkeit bei guter Wärmeformbeständigkeit und Verarbeitbarkeit auszeichnen.

Wie aus dem Vergleich der Beispiele 11 bis 17 mit den entsprechenden Vergleichsbeispielen hervorgeht, wird durch Zusatz von Polyoctenylen als einer Mischungskomponente der erfindungsgemäßen thermoplastischen Massen eine deutliche schlagzähverbessernde Wirkung erzielt.

In den Fällen, in denen bereits durch einen hohen Anteil von Styrolpolymerisaten eine erhebliche Schlagzähigkeit der Formmassen erreicht werden kann, läßt sich diese durch den Zusatz von Polyoctenylen noch weiter erhöhen. Das Polyoctenylen entfaltet erstaunlicherweise einen synergistischen Effekt.

Im Vergleich zu den in der deutschen Patentanmeldung P 34 36 780.2 beschriebenen Formmassen, die nur Polyphenylenether, Polyoctenylene und gegebenenfalls weitere Zusatzstoffe enthalten, ist die verbesserte Verarbeitbarkeit hervorzuheben.

Gegenstand der vorliegenden Erfindung sind die thermoplastischen Massen gemäß den Ansprüchen 1 bis 12

Gegenstand der Erfindung ist ebenfalls ein Verfahren zur Herstellung dieser Massen gemäß den Ansprüchen 13 und 14.

Polyoctenylene sind keine Kautschuke im engeren Sinne, da sie sich unter den Verarbeitungsbedingungen wie Thermoplaste verhalten (vgl. A. Dräxler, Kautschuk + Gummi, Kunststoffe Band 12, Seiten 1037 bis 1043, (1983). Bei Raumtemperatur verhalten sich die Polyoctenylene wie niedrigschmelzende Verarbeitungshilfsmittel und lassen keine Eignung als Schlagzähmacher erkennen.

Es erscheint überraschend, daß die Polyoctenylene offenbar dann eine schlagzähmachende Wirkung gegenüber Polyphenylenethern entfalten, wenn sie einer bestimmten Temperaturbehandlung unterworfen werden.

Unter thermoplastischen Massen sollen im Rahmen dieser Erfindung ungeformte Mischungen angesehen werden, die sich durch thermoplastische Verarbeitung zu Formteilen oder zu Halbzeug verarbeiten lassen. Die thermoplastischen Massen können beispielsweise als Granulat vorliegen.

Als Polyphenylenether A kommen in erster Linie Polyether auf Basis von 2,6-Dimethylphenol infrage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole infrage, deren Alkylrest vorzugsweise höchstens 6 C-Atomen besitzt sofern sichergestellt ist, daß dieser kein $\alpha$-ständiges tertiäres C-Atom aufweist. Jedes der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z. B. in Gegenwart von komplexbildenden Mitteln, wie Kupferbromid und Morpholin, aus den Phenolen hergestellt werden (vgl. DE-OSS 32 24 692 und 32 24 691). Die Viskositätszahlen, bestimmt nach DIN 53 728 in Chloroform bei 25 °C, liegen im Bereich von 35 bis 80 ml/g. Bevorzugt ist das Polymere des 2,6-Dimethylphenols, der Poly-(2,6-dimethyl-1,4-phenylenether) mit einer Viskositätszahl von 40 bis 65 ml/g.

Die Polyphenylenether werden üblicherweise als Pulver oder Granulate eingesetzt.

Als Komponente B können Styrolhomopolymerisate und/oder schlagzähe Styrolpolymerisate eingesetzt werden.

Die Styrolhomopolymerisate werden in bekannter Weise aus Styrol durch radikalische Masse- oder Suspensionspolymerisation hergestellt. Ihre Molekularmassen liegen zwischen 150 000 und 300 000 (vgl. Kunststoff-Handbuch, Band V, Polystyrol, Carl Hanser Verlag München, 1969, und Ullmanns Encyklopädie der technischen Chemie, 4. Auflage, Band 19, Verlag Chemie, Weinheim 1980).

Die schlagzähen Styrolpolymerisate werden in bekannter Weise erhalten, indem styrolische Lösungen von Kautschuken, wie Poly-cis-butadien, in Masse, in Lösung oder in wäßriger Dispersion polymerisiert werden. Bei dem sogenannten gemischten Verfahren wird die styrolische Kautschuklösung in Masse vorpolymerisiert und in wäßriger Dispersion zu Ende polymerisiert (siehe beispielsweise US-PSS 2 694 692 und 2 862 906).

Die Einstellung der Teilchengröße der Weichphase erfolgt in an sich bekannter Weise in der Stufe der Vorpolymerisation vor der sogenannten Phasenumkehr. Gegebenenfalls kann auch in Gegenwart der bekannten Kettenregler und/oder radikalischer Initiatoren gearbeitet werden. Einzelheiten, wie z. B. der Zusammenhang zwischen der Rührgeschwindigkeit und der Größe und Verteilung der Kautschukteilchen im resultierenden schlagfesten Polymerisat sind dem Fachmann bekannt (siehe z. B. Freeguard Brit. Polym. J. 6, 203 - 228, (1974).

Der Durchmesser der Teilchen in der elastomeren Gelphase liegt üblicherweise unter 10 $\mu$m, vorzugsweise unter 3,5 $\mu$m. Der mittlere Durchmesser (Volumenmittel) liegt im Bereich zwischen 1 und 5 $\mu$m. Hierbei sind jedoch die Teilchen nicht berücksichtigt, deren Durchmesser entweder unter 0,5 $\mu$m oder über 10 $\mu$m liegt.

Die mittlere Teilchengröße (Volumenanteil) wird bestimmt durch Ausmessen und Mitteln der Durchmesser von flächengleichen Kreisen (Äquivalentdurchmesser) der Teilchen aus elektronenmikroskopischen Dünnschicht-Aufnahmen.

Mit den Volumina der Teilchen (3. Potenz des Äquivalentdurchmessers) wird die Verteilungskurve und daraus das Volumenmittel errechnet. Für die Auswertung sollen mindestens 2 000 Teilchen herangezogen werden.

Die Polyoctenylene C werden durch ringöffnende bzw. ringerweiternde Polymerisation von Cycloocten hergestellt (siehe z. B. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 ml/g, vorzugsweise 80 bis 160 ml/g, bestimmt an einer 0,1 %igen Lösung in Toluol. 55 bis 95 %, vorzugsweise 75 bis 85 %, seiner Doppelbindungen liegen in der trans-Form vor.

Die Komponente D umfaßt

- statistische Copolymere von Styrol und Butadien. Derartige Polymere können beispielsweise durch radikalische Emulsionspolymerisation erhalten werden. Bevorzugt sind Copolymere mit einem Styrolgehalt von 15 bis 40 Gewichtsprozent. Selbstverständlich können auch Mischungen mit anderen Styrolharzen eingesetzt werden.
- Blockcopolymere aus Styrol und Butadien vom Typ S-B-S. Derartige Copolymere können z. B. durch anionische Polymerisation in Lösung erhalten werden (vgl. Ullmanns Encyklopädie der technischen Chemie, 4. Auflage, Band 13, 1977, Seite 595 ff, insbesondere Seite 609). Bevorzugt sind Copolymere mit einem Styrolgehalt von 15 bis 50 %.

Vorzugsweise werden die Komponenten in einem solchen Verhältnis eingesetzt, daß der Quotient aus der Summe der Massen der Komponenten A und B und der Summe der Massenanteile von C und D einen Wert zwischen 5 und 15 annimmt.

Besonders bevorzugt sind Massen, die zumindest in geringen Mengen die Komponente D enthalten und für die das Verhältnis der Massenanteile der Komponenten A/B wie C/D zwischen 0,5 und 2 liegt.

Die erfindungsgemäßen thermoplastischen Massen können als Komponente E einen Flammschutz sowie weitere Zusatzstoffe, wie Pigmente, Oligomere, Antistatika, Stabilisatoren und Verarbeitungshilfsmittel sowie Verstärkungsmittel, enthalten. Der Anteil der Verstärkungsmittel kann bis zu 50, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel "Flammenfestmachen von Kunststoff", Hüthig-Verlag, 1966, auf den Seiten 94 bis 102 beschrieben wird. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Es wesentliches Merkmal der vorliegenden Erfindung sind die Verfahren, nach denen die Formmassen auf Basis von Polyphenylenethern und Polyoctenylenen hergestellt werden.

I Schmelzen und Mischen der Komponenten

Kennzeichnend für dieses Verfahren ist die Vermischung der Komponenten im geschmolzenen Zustand. Man schmilzt zumindest eine Komponente auf und vermischt die erhaltene Schmelze mit den übrigen Komponenten. Eine andere Möglichkeit besteht darin, alle Komponenten gemeinsam aufzuschmelzen und zu vermischen.

Dabei werden Schmelztemperaturen von 250 bis 350 °C, insbesondere von 250 bis 300 °C, und Verweilzeiten von 0,3 bis 10 Minuten, insbesondere von 0,5 bis 3 Minuten, angewendet.

Für das Schmelzen und Vermischen eignen sich übliche Geräte zur Behandlung von hochviskosen Schmelzen, sowohl im absatzweisen als auch im kontinuierlichen Betrieb. Besonders geeignet sind Doppelschneckenkneter und Kokneter.

II Herstellung einer Vorformmasse und anschließendes Mischen in der Schmelze.

In vielen Fällen ist es vorteilhaft, zunächst eine Vorformmasse herzustellen, indem man eine gemeinsame Lösung der Komponenten herstellt und das Lösemittel entfernt, und dann die Vorformmasse, wie unter I beschrieben, aufzuschmelzen. Man kann auch eine Vorformmasse aus nur einem Teil der Komponenten herstellen, diese aufschmelzen und mit den weiteren Komponenten vereinigen.

Die gemeinsame Lösung kann dadurch hergestellt werden, daß man die Komponenten in geeigneten, möglicherweise unterschiedlichen Lösemitteln löst und diese Lösungen vereinigt. Man kann aber auch ein Lösemittel suchen, in dem alle Komponenten aufgelöst werden.

Geeignete Lösemittel in diesem Sinne sind Lösemittel, in denen sich die Polymeren weitgehend vollständig auflösen; insbesondere kommen Aromaten, vorzugsweise Toluol, infrage.

Das Lösemittel kann entfernt werden, indem man entweder das Lösemittel abdampft oder der Lösung einen Nichtlöser, wie z. B. Methanol, zusetzt, das Polymerengemisch ausfällt und anschließend trocknet.

Die Konzentration des Polymerengemisches in dem Lösemittel bzw. den Lösemittelgemischen liegt üblicherweise zwischen 5 und 70 Gewichtsprozent, vorzugsweise bei 10 bis 20 Gewichtsprozent.

Die Zusatzstoffe können den Polymeren in den Verfahren I und II oder in einer getrennten Verfahrensstufe über übliche Doppelschneckenextruder oder Kokneter zugesetzt werden.

Die erfindungsgemäßen thermoplastischen Formmassen lassen sich mit den für die Thermoplastverarbeitung üblichen Verfahren, wie z. B. Spritzgießen und Extrusion, zu Formkörpern verarbeiten. Beispiele für technische Anwendungsgebiete sind Rohre, Platten, Gehäuse und sonstige technische Artikel für den Automobil-, Elektro- und Feinwerksektor.

Herstellung und Herkunft der Komponenten

1. Polyphenylenether (PPE)

Die Polyphenylenether erhielt man durch oxidative Kupplung von 2,6-Dimethylphenol, Abstoppung der Reaktion bei dem gewünschten J-Wert und anschließende Reaktionsextraktion gemäß DE-OSS 33 13 864 und 33 32 377.

1.1

Entsprechend der allgemeinen Arbeitsvorschrift wurde ein Polyphenylenether mit einem J-Wert von 68 ml/g (bestimmt in Chloroform nach DIN 53 728) hergestellt. Das Lösemittel wurde durch Abdampfen entfernt und die Schmelze über einen Entgasungsextruder extrudiert und anschließend granuliert.

1.2

Analog zu Beispiel 1.1 wurde ein Polyphenylenether mit einem J-Wert von 51 ml/g hergestellt und anschließend extrudiert und granuliert.

1.3

Analog Zu Beispiel 1.1 wurde ein Polyphenylenether mit einem J-Wert von 45 ml/g hergestellt. Dieser wurde gemäß Verfahren II mit einem kautschukmodifiziertien Polystyrol in Toluol vereinigt (siehe Beispiel D).

1.4

Analog Zu Beispiel 1.1 wurde ein Polyphenylenether mit einem J-Wert von 45 ml/g hergestellt und gemäß Verfahren II mit einem Styrolpolymerisat und einem Polyocten in Toluol vereinigt (siehe Beispiele 13 und 14).

1.5

Einen Polyphenylenether mit einem J-Wert von 50 ml/g erhielt man durch oxidative Kupplung von 2,6-Dimethylphenol, Abstoppung der Reaktion und anschließender Reaktionsextraktion gemäß DE-OSS 33 13 864 und 33 32 377. Gemäß deutscher Patentanmeldung P 33 37 629 wurde eine Mischung aus diesem Polyphenylenether und kautschukmodifiziertem Polystyrol nach 2.2 im Massenverhältnis 55 : 45 hergestellt.

1.6

Analog zu Beispiel 1.1 wurde eine 10 %ige organische Lösung eines Polyphenylenethers mit einem J-Wert von 56 ml/g hergestellt. Die Lösung des Polyphenylenethers wurde nach Verfahren II mit dem jeweiligen Polyaklkenylen vermischt. Durch Zusatz von Methanol fällte man die Polymeren aus und arbeitete sie zu einem trockenen Pulver auf.

2. Styrolpolymerisate

2.1

Als Styrolhomopolymerisat wird VESTYRON® 114, ein Produkt der Fa. Chemische Werke Hüls AG, D-4370 Marl, eingesetzt. Die Kenndaten dieses Produktes sind der Broschüre "Kunststoffe von hüls, VESTYRON®", Ausgabe September 1983, zu entnehmen.

2.2

Als schlagfestes Styrolpolymerisat wird VESTYRON® 616 der Fa. Chemische Werke Hüls AG, D-4370 Marl, eingesetzt. Die Kenndaten dieses Produktes sind der Broschüre "Kunststoffe von hüls, VESTYRON®", Ausgabe September 1979, zu entnehmen.

3. Polyalkenylene

3.1 Polyoctenylen

Es wurde ein Polyoctenylen mit einem J-Wert von 120 ml/g und einem trans-Gehalt von 80 % eingesetzt. Ein solches Produkt ist unter dem Namen VESTENAMER® 8012 im Handel erhältlich (Hersteller: Chemische Werke Hüls AG, D-4370 Marl I). Weitere Kenndaten dieses Produktes sind der Zeitschrift "Kautschuk, Gummi, Kunststoffe" 1981, Seiten 185 bis 190, sowie dem hüls-Merkblatt Nr. 2247 "VESTENAMER® 8012" zu entnehmen.

3.2 Polypentenylen

Es wurde ein Polypentenylen mit einem J-Wert von 184 ml/g und einem trans-Gehalt von 89 % (nach IR-Spektrum) eingesetzt.

3.3 Polydodecenylen

Es wurde ein Polydodecenylen mit einem J-Wert von 90 ml/g und einem trans-Gehalt von 81 % (nach IR-Spektrum) eingesetzt. Wegen der geringen Löslichkeit des Produktes in Toluol war es erforderlich, die J-Wert-Bestimmung in Dekalin bei 135 °C durchzuführen.

Die Polyalkenylene können nach K. J. Ivin "Olefin Metathesis", Academic Press, 1983, und den dort angegebenen weiteren Literaturstellen hergestellt werden.

4. Copolymere von Styrol und Butadien

4.1

Man verwendete eine Polymermischung aus 60 Massenteilen eines Styrol-Butadien-Copolymerisats (85 Massenteile Styrol und 15 Massenteile Butadien) und 40 Massenteilen eines E-SBR-Kautschuks (Styrol : Butadien-Verhältnis von 23,5 : 76,5). Beide Bestandteile wurden in bekannter Weise durch radikalische Emulsionspolymerisation gewonnen.

4.2

Es wurde ein S-B-S-Blockcopolymeres auf Basis von Styrol und Butadien eingesetzt. Ein solches Produkt ist unter dem Namen CARIFLEX® TR 102 (Hersteller: Shell Internationale Petroleum Co. Ltd.) im Handel erhältlich.

5. Zusatzstoffe

5.1

Didecylphenylphosphit

5.2

Octadecyl-3-(3,5-di-tert.-butyl-4-hydroxyphenyl)-propionat

5.3

Oxidiertes Polyethylenwachs mit einem Molekulargewicht von 1 500. Ein solches Produkt ist in bekannter Weise durch Oxidation von Polyethylen erhältlich. Es ist unter dem Namen VESTOWAX® AO 1539 auch im Handel erhältlich (Hersteller: Chemische Werke Hüls AG, D-4370 Marl I).

Herstellung und Prüfung der Polymermischungen

Für die Fertigung der schlagzähen polymeren Mischungen benutzte man einen ZSK 30 Doppelschnek-kenkneter der Fa. Werner und Pfleiderer mit Förder-, Knet- und Entgasungszonen.

Die Bestandteile wurden, sofern Verfahren I zur Anwendung kam, mechanisch gemischt und in dem genannten Gerät umgeschmolzen, wobei einheitlich eine Zylindertemperatur von 250 °C und eine Schnek-kendrehzahl von 250 $min^{-1}$ verwendet wurde. Die austretenden Schmelzstränge wurden nach üblichem Verfahren granuliert. Man trocknete sie bei 110 °C bis zu einer Feuchte von weniger als 0,05 %.

Bei den Formmassen, die gemäß den Beispielen D, 13 und 14 (Verfahren II) hergestellt wurden, wurden das Polyoctenylen und die übrigen Komponenten in einer organischen Lösung (90 % Toluol und 10 % Methanol) des Polyphenylenethers gelöst. Die Lösung wurde auf 50 % aufkonzentriert. Das noch verbleibende Lösemittel wurde durch Flash-Verdampfen entfernt. Alternativ kann auch ein Entgasungsextruder eingesetzt werden.

Bei den Beispielen 18, I und K (Verfahren II) wurde aus der gemeinsamen Lösung das Gemisch aus Polyphenylenether und Polyalkenylen durch Zusatz von Methanol ausgefällt und zu einem trockenen Pulver aufgearbeitet.

In den übrigen Fällen wurde das Verfahren II in der Weise ausgeführt, daß zunächst eine Vorformmasse, bestehend aus Polyphenylenether (55 Massenteile) und schlagzähem Polystyrol (45 Massenteile), durch Verdampfen ihrer gemeinsamen Lösung (90 % Toluol, 10 % Methanol) hergestellt wurde. Diese Vorformmasse wurde sodann mit den übrigen Komponenten gemischt und in einem Ko-Kneter bei 240 °C umgeschmolzen.

Für die Bestimmung der Kerbschlagzähigkeit ($a_k$) nach DIN 53 453 verarbeitet man das Granulat auf einer Spritzgußmaschine bei einer Zylindertemperatur von 240 bis 260 °C und einer Werkzeugtemperatur von 90 °C zu Normkleinstäben.

Die Vicat-Erweichungstemperatur nach DIN 53 460 bestimmte man an 4 mm dicken Preßplatten, die man bei 250 °C hergestellt hatte.

## Tabelle

| Bsp. Nr. | PPE | Mengenverhältnisse der Komponenten | | | | | | | | | | | Ver-fahren | $a_k$ kJ/m$^2$ | Vicat-Erweichungstemperatur | |
|---|---|---|---|---|---|---|---|---|---|---|---|---|---|---|---|---|
| | | PPE | 2.1 | 2.2 | 3.1 | 3.2 | 3.3 | 4.1 | 4.2 | 5.1 | 5.2 | 5.3 | | | A | B |
| A | 1.2 | 90 | 10 | | | | | | | 0,5 | | | I | 1,9 | 190 | 184 |
| 11 | 1.2 | 90 | 10 | | 10 | | | | | 0,5 | | | I | 7,5 | 189 | 180 |
| B | 1.1 | 34 | 66 | | | | | | | 0,5 | 0,5 | | I | 2,2 | 128 | 126 |
| C | 1.1 | 34 | 46 | | | | | 20 | | 0,5 | 0,5 | | I | 6,7 | 126 | 118 |
| 12 | 1.1 | 34 | 46 | | 5 | | | 15 | | 0,5 | 0,5 | | I | 9,0 | 128 | 117 |
| D | 1.3 | 60 | | 40 | | | | | | | | | II | 10,1 | 159 | 148 |
| 13 | 1.4 | 60 | | 30 | 10 | | | | | | | | II | 17,0 | 163 | 149 |
| 14 | 1.4 | 60 | 30 | | 10 | | | | | | | | II | 7,2 | 160 | 151 |
| E | 1.5 | 34 | | 66 | | | | | | 0,5 | 0,5 | | II | 10,1 | 133 | 127 |
| 15 | 1.5 | 34 | | 56 | 10 | | | | | 0,5 | 0,5 | | II | 11,4 | 134 | 125 |
| F | 1.5 | 34 | | 56 | | | | 10 | | 0,5 | 0,5 | | II | 12,1 | 130 | 121 |
| 16 | 1.5 | 34 | | 56 | 5 | | | 5 | | 0,5 | 0,5 | | II | 17,6 | 132 | 126 |
| G | 1.5 | 34 | | 66 | | | | | | 0,5 | 0,5 | 1,5 | II | 12,2 | 129 | 119 |
| H | 1.5 | 34 | | 56 | | | | | 10 | 0,5 | 0,5 | 1,5 | II | 15,9 | 132 | 122 |
| 17 | 1.5 | 34 | | 56 | 5 | | | | 5 | 0,5 | 0,5 | 1,5 | II | 19,3 | 132 | 123 |
| 18 | 1.6 | 54 | | 40 | 6 | | | | | 0,5 | 0,5 | 1,5 | II | 15,6 | 152 | 142 |
| I | 1.6 | 54 | | 40 | | 6 | | | | 0,5 | 0,5 | 1,5 | II | 13,8 | 153 | 143 |
| K | 1.6 | 54 | | 40 | | | 6 | | | 0,5 | 0,5 | 1,5 | II | 13,4 | 157 | 146 |

## Patentansprüche

1. Thermoplastische Massen auf Basis von Polyphenylenethern, Styrolharzen und Polyalkenylenen, dadurch gekennzeichnet,

daß sie durch schmelzen und mischen von

A 20 bis 90 Massenteilen Polyphenylenether,

B 5 bis 70 Massenteilen Styrolhomopolymerisate oder schlagzähe Styrolpolymerisate,

C 2 bis 70 Massenteilen Polyoctenylenen,

D 0 bis 20 Massenteilen Copolymeren auf Basis Styrol und Butadien und

E gegebenenfalls weiteren Zusatzstoffen

hergestellt wurden.

2. Thermoplastische Massen gemäß Anspruch 1,
dadurch gekennzeichnet,
daß man als Komponente A ein Polymeres des 2,6-Dimethylphenols einsetzt.

3. Thermoplastische Massen nach Anspruch 2,
dadurch gekennzeichnet,
daß das Polymere eine Viskositätszahl von 40 bis 65 ml/g aufweist.

4. Thermoplastische Massen nach den Ansprüchen 1 bis 3,
dadurch gekennzeichnet,
daß als Komponente B ein Styrolhomopolymerisat mit einer Molekularmasse zwischen 150 000 und 300 000 eingesetzt wird.

5. Thermoplastische Massen nach den Ansprüchen 1 bis 3,
dadurch gekennzeichnet,
daß als Komponente B ein schlagzähes Styrolpolymerisat eingesetzt wird.

6. Thermoplastische Massen nach den Ansprüchen 1 bis 5,
dadurch gekennzeichnet,
daß man als Komponente C ein Polymeres mit einer Viskositätszahl von 50 bis 350 ml/g einsetzt, wobei 55 bis 95 % der Doppelbindungen trans-konfiguriert sind.

7. Thermoplastische Massen nach Anspruch 6,
dadurch gekennzeichnet,
daß man die Komponente C in einer Menge von 2 bis 20 Massenteilen einsetzt.

8. Thermoplastische Massen nach den Ansprüchen 1 bis 7,
dadurch gekennzeichnet,
daß man als Komponente D Styrol-Butadien-Copolymer mit einem Styrolgehalt von 15 bin 40 Gewichtsprozent einsetzt.

9. Thermoplastische Massen nach den Ansprüchen 1 bis 7,
dadurch gekennzeichnet,
daß man als Komponente D SBS-Blockcopolymere des Styrols und Butadiens einsetzt.

10. Thermoplastische Massen nach den Ansprüchen 1 bis 9,
dadurch gekennzeichnet,
daß man als Komponente E Verstärkungsmittel, Flammschutzmittel und weitere Zusatzstoffe einsetzt, wobei der Anteil der Verstärkungsmittel bis zu 50 %, der der Flammschutzmittel bis zu 15 % und der aller übrigen Zusatzstoffe insgesamt bis zu 5 %, jeweils bezogen auf die gesamte Formmasse, betragen kann.

11. Thermoplastische Massen nach den Ansprüchen 1 bis 10,
dadurch gekennzeichnet,
daß für das Verhältnis der Komponenten folgende Bedingung gilt

$$5 < \frac{a+b}{c+d} < 15,$$

wobei a, b, c und d die Anzahl Massenteile der jweiligen Komponenten A, B, C und D bedeuten.

12. Thermoplastische Massen nach Anspruch 11,
   dadurch gekennzeichnet,
   daß zusätzlich folgende Bedingungen gelten;

$$d > 0$$
$$0{,}5 < \frac{a}{b} < 2$$
$$0{,}5 < \frac{c}{d} < 2.$$

13. Verfahren zur Herstellung der thermoplastischen Massen gemäß den Ansprüchen 1 bis 12,
   dadurch gekennzeichnet,
   daß die Massen durch Mischen der Komponenten bei einer Schmelztemperatur von 250 bis 350 °C und einer Verweilzeit von 0,3 bis 10 Minuten hergestellt werden.

14. Verfahren zur Herstellung der thermoplastischen Massen gemäß den Ansprüchen 1 bis 12,
   dadurch gekennzeichnet,
   daß durch Lösen der Komponenten in einem geeigneten Lösemittel und dessen anschließende Entfernung zunächst eine Vorformmasse hergestellt wird, die anschließend - gegebenenfalls mit weiteren Komponenten - wie im Anspruch 13 angegeben, umgeschmolzen wird.

**Claims**

1. Thermoplastic compositions based on polyphenylene ethers, styrene resins and polyalkenylenes, characterized in that they have been prepared by melting and mixing
   A from 20 to 90 parts by weight of polyphenylene ethers,
   B from 5 to 70 parts by weight of styrene homopolymers or toughened styrene polymers,
   C from 2 to 70 parts by weight of polyoctenylenes,
   D from 0 to 20 parts by weight of copolymers based on styrene and butadiene, and
   E if desired, further additives.

2. Thermoplastic compositions according to claim 1, characterized in that a polymer of 2,6-dimethylphenol is employed as component A.

3. Thermoplastic compositions according to claim 2, characterized in that the polymer has a viscosity number of from 40 to 65 ml/g.

4. Thermoplastic compositions according to any of claims 1 to 3, characterized in that a styrene homopolymer having a molecular weight of from 150,000 to 300,000 is employed as component B.

5. Thermoplastic compositions according to any of claims 1 to 3, characterized in that a toughened styrene polymer is employed as component B.

6. Thermoplastic compositions according to any of claims 1 to 5, characterized in that a polymer having a viscosity number of from 50 to 350 ml/g is employed as component C, from 55 to 95% of the double bonds having the trans configuration.

7. Thermoplastic compositions according to claim 6, characterized in that component C is employed in an amount from 2 to 20 parts by weight.

8. Thermoplastic compositions according to any of claims 1 to 7, characterized in that a styrene/butadiene copolymer having a styrene content of from 15 to 40% by weight is employed as component D.

9. Thermoplastic compositions according to any of claims 1 to 7, characterized in that an SBS block copolymer of styrene and butadiene is employed as component D.

10. Thermoplastic compositions according to any of claims 1 to 9, characterized in that reinforcing agents, flameproofing agents and other additives are employed as component E, it being possible for the content of reinforcing agents to be up to 50%, that of flameproofing agents to be up to 15% and that of all the other additives in total to be up to 5%, in each case based on the total moulding composition.

11. Thermoplastic compositions according to any of claims 1 to 10, characterized in that the following condition applies to the ratio of the components

$$5 \; < \; \frac{a + b}{c + d} \; < \; 15,$$

where a, b, c and d denote the number of parts by weight of the respective components A, B, C, and D.

12. Thermoplastic compositions according to claim 11, characterized in that the following conditions additionally apply:

$$d > 0$$
$$0.5 < \tfrac{a}{b} < 2$$
$$0.5 < \tfrac{c}{d} < 2 \,.$$

13. A process for the production of a thermoplastic composition according to any of claims 1 to 12, characterized in that the composition is produced by mixing the components at a melting temperature of from 250 to 350 °C over a residence time of from 0.3 to 10 minutes.

14. A process for the production of a thermoplastic composition according to any of claims 1 to 12, characterized in that a preliminary moulding composition is first produced by dissolving the components in a suitable solvent and subsequent removal thereof, and this is then remelted as described in claim 13, with further components if desired.

**Revendications**

1. Compositions thermoplastiques à base de polyphénylène-éthers, de résines styréniques et de polyalcénylènes,
caractérisées par le fait qu'elles ont été préparées par fusion et mélange
   A) de 20 à 90 parties en masse de polyphénylèneéthers,
   B) de 5 à 70 parties en masse d'homopolymères de styrène ou de polymères de styrène résistant au choc,
   C) de 2 à 70 parties en masse de polyocténylènes,
   D) de 0 à 20 parties en masse de copolymères à base de styrène et de butadiène, et
   E) éventuellement d'autres additifs.

2. Compositions thermoplastiques selon la revendication 1,
caractérisées par le fait qu'on utilise comme constituant A un polymère du 2,6-diméthylphénol.

3. Compositions thermoplastiques selon la revendication 2,
caractérisées par le fait que le polymère a un indice de viscosité de 40 à 65 ml/g.

4. Compositions thermoplastiques selon les revendications 1 à 3,
caractérisées par le fait qu'on utilise comme constituant B un homopolymère du styrène ayant une masse moléculaire comprise entre 150 000 et 300 000.

5. Compositions thermoplastiques selon les revendications 1 à 3,
caractérisées par le fait qu'on utilise comme constituant B un polymère du styrène résistant au choc.

6. Compositions thermoplastiques selon les revendications 1 à 5,
caractérisées par le fait qu'on utilise comme constituant C un polymère ayant un indice de viscosité de 50 à 350 ml/g, de 55 à 95 % des doubles liaisons étant en configuration trans.

7. Compositions thermoplastiques selon la revendication 6,
caractérisées par le fait qu'on utilise le constituant C en une quantité de 2 à 20 parties en masse.

8. Compositions thermoplastiques selon les revendications 1 à 7,
caractérisées par le fait qu'on utilise comme constituant D un copolymère styrène-butadiène ayant une teneur en styrène de 15 à 40 % en poids.

9. Compositions thermoplastiques selon les revendications 1 à 7,
caractérisées par le fait qu'on utilise comme constituant D des copolymères séquencés SBS du styrène et du butadiène.

10. Compositions thermoplastiques selon les revendications 1 à 9,
caractérisées par le fait qu'on utilise comme constituant E des agents de renforcement, des retardateurs de flamme et d'autres additifs, la quantité de l'agent de renforcement pouvant aller jusqu'à 50 %, celle du retardateur de flamme jusqu'à 15 % et celle de l'ensemble des autres additifs, globalement jusqu'à 5 %, dans tous les cas par rapport à la totalité du mélange à mouler.

11. Compositions thermoplastiques selon les revendications 1 à 10,
caractérisées par le fait que le rapport entre les constituants respecte la condition suivante :

$$5 < \frac{(a + b)}{(c + d)} < 15$$

où a, b, c et d représentent le nombre des parties en masse des différents constituants A, B, C et D.

12. Compositions thermoplastiques selon la revendication 11,
caractérisées par le fait que s'appliquent en outre les conditions suivantes :

$$d > 0$$
$$0,5 < \frac{a}{b} < 2$$
$$0,5 < \frac{c}{d} < 2$$

13. Procédé pour préparer les compositions thermoplastiques selon les revendications 1 à 12,
caractérisé par le fait qu'on prépare les compositions par mélange des constituants à une température de fusion de 250 à 350°C et pendant un temps de séjour de 0,3 à 10 minutes.

14. Procédé pour préparer les compositions thermoplastiques selon les revendications 1 à 12,
caractérisé par le fait qu'on prépare d'abord, par dissolution des constituants dans un solvant approprié, puis élimination de ce dernier, un prémélange à mouler, que l'on fait ensuite refondre - éventuellement avec des constituants supplémentaires - comme indiqué dans la revendication 13.